# EUROPEAN PATENT APPLICATION

(11) **EP 4 160 437 A1**
(43) Date of publication of application: **05.04.2023**
(21) Application number: 21811944.4
(22) Date of filing: 11.05.2021
(51) Int. Cl.: G06F 16/27, G06F 9/451

(54) **METHOD AND APPARATUS FOR SHARING OPERATING SYSTEM, AND SYSTEM AND COMPUTER-READABLE STORAGE MEDIUM**

(30) Priority: 27.05.2020 CN 202010459299
(71) Applicant: ZTE Corporation, Shenzhen, Guangdong 518057 (CN)
(72) Inventor: WANG, Linfeng, Shenzhen, Guangdong 518057 (CN)
(74) Representative: Novagraaf Technologies
(86) International application number: PCT/CN2021/092923
(87) International publication number: WO 2021/238639

(57) **Abstract**

Provided is a method for sharing an operating system. The method comprises: personal data is stored on a server different from a server where an operating system is stored, so that the personal data and the operating system are stored separately, and the operating system can be shared; embodiments of the present invention further provide an apparatus and system for sharing the operating system, and a computer-readable storage medium. By implementing the described solution, personal data and the operating system are stored separately in a certain implementation process, so that the purchase of the operating system is reduced, thereby greatly reducing the cost of purchasing the operating system by an enterprise; furthermore, personal data can be stored for a user, thereby greatly improving experience.

## Description

### Technical Field

Embodiments of the present invention relate to, but not limited to, the field of mobile communications, and in particular, to, but not limited to, a method, an apparatus, and a system for sharing an operating system, and a computer readable storage medium.

### Background

In recent years, cloud desktop technologies gradually become mature, and have been widely applied to research institutions such as schools and hospitals, and can replace a personal computer desktop. Compared with the personal computer desktop, the cloud desktop has advantages such as convenience in management and use at any place.

For enterprises with numerous cloud desktops, the purchase of desktop operating systems is a huge cost. In practical use, not every operating system is used at the same time; therefore, a plurality of users can use the same operating system. However, when a plurality of users use the same operating system, personal data cannot be stored, which brings bad experience to the users.

### Summary

Embodiments of the present invention provide a method, an apparatus, and a system for sharing an operating system, and a computer readable storage medium. A main technical problem to be solved by the embodiments of the present invention is that use of an operating system and storage of personal data in a cloud desktop technology are not well solved in the related art, thereby causing a user to have a low experience in use.

In order to solve the described technical problem, an embodiment of the present invention provides a method for sharing an operating system, which is applied to a cloud desktop. The method comprises: personal data is stored on a server different from a server where an operating system is stored, so that the personal data and the operating system are stored separately, and the operating system can be shared.

An embodiment of the present invention further provides an apparatus for sharing an operating system, which is applied to a cloud desktop. The apparatus comprises: a control module; and the control module is configured to store the personal data on a server different from a server where the operating system is stored, so that the personal data and the operating system are stored separately, and the operating system can be shared.

An embodiment of the present invention further provides a system. The system comprises: a processor, a memory and a communication bus; the communication bus is configured to implement connection and communication between the processor and the memory; the processor is configured to execute one or more computer programs stored in the memory, so as to implement the steps of the method for sharing an operating system.

An embodiment of the present invention further provides a computer readable storage medium. The computer readable storage medium stores one or more programs. The one or more programs may be executed by one or more processors, so as to implement the steps of the above method for sharing an operating system.

According to the method, apparatus and system for sharing an operating system, and the computer-readable storage medium provided in the embodiments of the present invention, personal data is stored in a server different from a server where an operating system is stored, so that the personal data and the operating system are stored separately, and the operating system can be shared; the problem in the related art that the use experience of a user is low due to the fact that the use of the operating system and the storage of personal data in a cloud desktop technology are not well solved is solved. That is, the method, apparatus and system for sharing an operating system, and the computer readable storage medium provided in the embodiments of the present invention store personal data and the operating system separately, thereby reducing the purchase of the operating system, and greatly reducing the cost for purchasing the operating system by an enterprise; furthermore, personal data can be stored for a user, thereby greatly improving experience.

Additional features and corresponding advantages of the invention will be set forth in the description which follows, and in part will be readily apparent from the description of the invention.

### Brief Description of the Drawings

Fig. 1 is a basic flowchart of a method for sharing an operating system according to a first embodiment of the present invention;
Fig. 2 is a basic flowchart of creating corresponding cloud disks for different users on a second server according to a first Embodiment of the present invention;
Fig. 3 is a basic flowchart of establishing a connection between a client and a cloud desktop corresponding to an operating system according to a first embodiment of the present invention;
Fig. 4 is a basic flowchart of detecting whether a cloud disk corresponding to a client mounted on a cloud desktop currently is mounted on the cloud desktop for the first time according to Embodiment one of the present invention;
Fig. 5 is a basic flowchart of disconnecting a mounting of a cloud disk on a cloud desktop corresponding to an operating system and a connection between a client and the cloud desktop according to Embodiment one of the present invention;
Fig. 6 is a basic flowchart of a method for sharing an operating system provided by Embodiment two of the present invention;
Fig. 7 is a first schematic structural diagram of an apparatus for sharing an operating system according to a third embodiment of the present invention;
Fig. 8 is a second schematic structural diagram of an apparatus for sharing an operating system according to a third embodiment of the present invention;
Fig. 9 is a third schematic structural diagram of the device for sharing an operating system provided by embodiment three of the present invention;
Fig. 10 is a schematic diagram of a structure of a system according to a fourth embodiment of the present invention.

### Detailed Description of the Embodiments

In order to make the objects, technical solutions and advantages of the present invention more apparent, the embodiments of the present invention will be further described below in detail with reference to the drawings and specific embodiments. It should be understood that the specific embodiments described herein are only used to explain the present invention and are not intended to limit the present invention.

### Embodiment one:

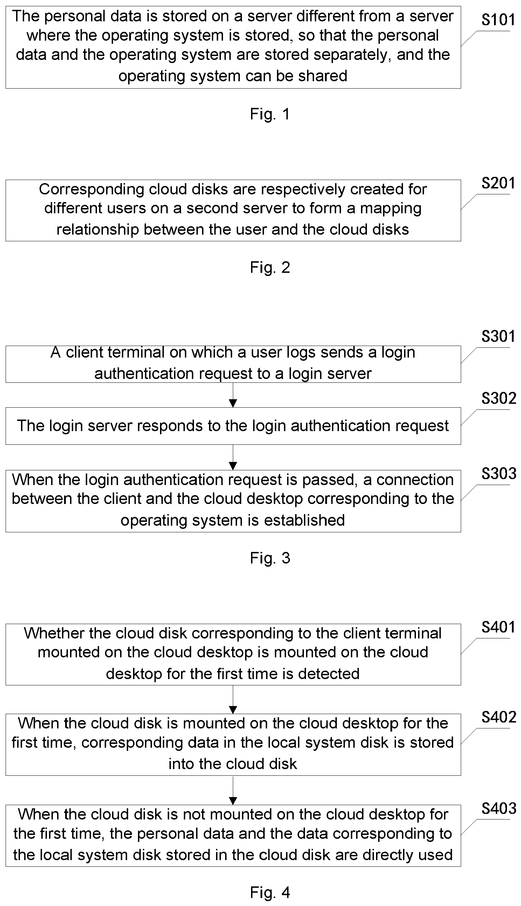

In order to solve the problem in the related art that the use of an operating system and the storage of personal data in a cloud desktop technology cause a low user experience, an embodiment of the present invention provides a method for sharing an operating system. Personal data is stored in a serve different from a server where the operating system is stored, so that the personal data and the operating system are stored separately, and the operating system can be shared; please refer to Fig. 1.

S101: the personal data is stored on a server different from a server where the operating system is stored, so that the personal data and the operating system are stored separately, and the operating system can be shared.

It should be understood that, in the related art, in order to reduce purchasing of an operating system, a plurality of users may use the same operating system, for example, an operating system recovery, a new desktop operating system creating, and a data disk mounting manner in the related art; however, in these various manners, after the user finishes using the operating system, the operating system is recovered, personal data of the user cannot be saved, thereby causing a low user experience. Therefore, in the embodiments of the present invention, the personal data and the operating system are stored separately, which not only ensures that a plurality of users use the same operating system, but also ensures the storage of the personal data, thereby greatly improving the user experience.

According to embodiments of the present invention, personal data is stored on a server different from where an operating system is stored, comprising: when the operating system is stored on a first server, the personal data is stored on a second server; the first server and the second server are different servers.

In some embodiments, the operating system may also be stored on a first server and the personal data on second, third, fourth, and fifth servers; in some embodiments, an operating system may also be stored on the first and second servers, and personal data may be stored on the third and fourth servers. It should be noted that, in a practical application, an operating system and a server for storing personal data may be flexibly adjusted according to an application scenario, as long as the operating system and the server are stored in different servers.

In order to better understand the present invention, the embodiments of the present invention are described below by taking an example in which an operating system is stored on a first server and personal data is stored on a second server.

In the embodiments of the present invention, before the personal data is stored on the second server when the operating system is stored in the first server, the method further comprises the following steps, as shown in Fig. 2:
S201: corresponding cloud disks are respectively created for different users on a second server to form a mapping relationship between the user and the cloud disks.

In this way, the personal data is stored on the second server comprises: the personal data is stored on a cloud disk corresponding to the second server according to a mapping relationship.

It should be understood that, when the second server is determined to store the personal data, regions corresponding to different users may be divided in the second server in advance, that is, corresponding cloud disks are separately established for different users, and a mapping relationship between the user and the cloud disks is formed; for example, user A1 corresponds to a cloud disk a1, user A2 corresponds to a cloud disk a2, and user A3 corresponds to a cloud disk a3.

In the embodiments of the present invention, before the personal data is stored on a server different from a server where the operating system is stored, the method further comprises at least the following steps, as shown in Fig. 3:
S301: a client on which a user logs sends a login authentication request to a login server.
S302: the login server responds to the login authentication request.
S303: when the login authentication request is passed, a connection between the client and the cloud desktop corresponding to the operating system is established.

It should be understood that, a user can send the login authentication request to the login server through the client to which the user logs, wherein the login authentication request is used to identify an identity of the user; further, the login server responds to the received login authentication request, that is, the login server identifies the identity of the user according to a user identifier in the login authentication request; further, when the login authentication request is passed, it indicates that the identity of the user is legal, and at this time, a connection between the client and the cloud desktop corresponding to the operating system is established, so that the user can operate the cloud desktop.

It should be noted that, in the embodiments of the present invention, a prerequisite for establishing a connection between a client and a cloud desktop corresponding to the operating system is that the cloud disk corresponding to the client is mounted on the cloud desktop, so as to ensure that personal data of a user can be stored on the cloud disk, wherein:
Before establishing the connection between the client and the cloud desktop in the embodiment of the present invention, there are at least two situations as follows:
Case 1: the cloud magnetic disk corresponding to the client is directly mounted on the cloud desktop.

It should be understood that, in the embodiment of the present invention, the cloud disk corresponding to the client may be directly mounted on the cloud desktop without detecting whether the cloud desktop is currently mounted on the cloud disk corresponding to the client, which is simpler and faster.

Case 2: detect whether a cloud disk corresponding to the client is mounted on the cloud desktop currently, and when the cloud disk corresponding to the client is not mounted on the cloud desktop currently, mount the cloud disk corresponding to the client on the cloud desktop.

It should be understood that, in the embodiment of the present invention, it may be first detected whether the cloud desktop is currently mounted with the cloud disk corresponding to the client; when the cloud desktop is not currently mounted with the cloud disk corresponding to the client, the cloud disk corresponding to the client is mounted on the cloud desktop; and when the cloud desktop is currently mounted with the cloud disk corresponding to the client, the cloud disk corresponding to the client does not need to be mounted on the cloud desktop again. In this way, a phenomenon that the cloud disk corresponding to the client is mounted on the cloud desktop again can be avoided.

After the connection between the client and the cloud desktop is established in the embodiment of the present invention, the method further includes the following steps. Please refer to Fig. 4:
S401: whether the cloud disk corresponding to the client mounted on the cloud desktop is mounted on the cloud desktop for the first time is detected.
S402: when the cloud disk is mounted on the cloud desktop for the first time, corresponding data in the local system disk is stored into the cloud disk.
S403: when the cloud disk is not mounted on the cloud desktop for the first time, the personal data and the data corresponding to the local system disk stored in the cloud disk are directly used.

It should be understood that, no data is stored in a cloud disk mounted for the first time, so in the embodiment of the present invention, it may be first detected whether a cloud disk corresponding to a client mounted on a cloud desktop currently is mounted on the cloud desktop for the first time; if the cloud disk is mounted on the cloud desktop for the first time, corresponding data in a local system disk may be stored in the cloud disk to update the data; and if the cloud disk is not mounted on the cloud desktop for the first time, the data corresponding to the local system disk and personal data stored in the cloud disk may be directly used. In this way, once the cloud desktop is operated by the user, personal data stored in the cloud disk corresponding to the user can be changed, deleted, updated, and the like, and further stored, so that the latest personal data is always obtained for the user, thereby greatly improving the use experience of the user.

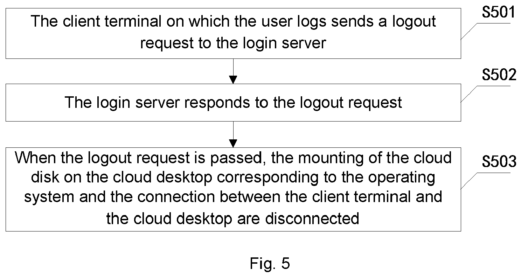

After storing the personal data into a server different from the server where the operating system is stored in the embodiment of the present invention, the method further includes the following steps, as shown in Fig. 5:
S501: the client on which the user logs sends a logout request to the login server.
S502: the login server responds to the logout request.
S503: when the logout request is passed, the mounting of the cloud disk on the cloud desktop corresponding to the operating system and the connection between the client and the cloud desktop are disconnected.

It should be understood that, when the user does not use the cloud desktop as required, the user may send a logout request to the login server through the client on which the user logs, wherein the logout request is used for the user to logout the use of the cloud desktop; further, the login server determines the logout request, and when it is determined that the logout request is valid, the cloud disk is disconnected from the cloud desktop corresponding to the operating system and the client is connected to the cloud desktop; it should be noted that, the mounting of the cloud disk on the cloud desktop corresponding to the operating system and the connection between the client and the cloud desktop are disconnected at the same time, that is, the mounting of the cloud disk and the connection between the operating system are disconnected.

According to the method for sharing the operating system provided in the embodiments of the present invention, personal data is stored on a server different from a server where an operating system is stored, so that the personal data and the operating system are stored separately, so that the operating system can be shared. The problem in the related art that the use experience of a user is low due to the fact that the use of the operating system and the storage of personal data in a cloud desktop technology are not well solved. That is, in the method for sharing an operating system provided in the embodiment of the present invention, the personal data and the operating system are stored separately, so that the purchase of the operating system is reduced, the cost for purchasing the operating system by the enterprise is reduced greatly, and the use efficiency of the operating system is improved; furthermore, personal data can be stored for a user, thereby greatly improving experience.

Further, in the method for sharing an operating system provided in the embodiment of the present invention, corresponding cloud disks are established for different users respectively, and in this way, a mapping relationship between a user and a cloud disk is clear, which facilitates viewing and management.

Further, in the method for sharing the operating system provided in the embodiment of the present invention, when the login is quitted and the connection between the client and the cloud desktop is disconnected, the mounting of the cloud disk on the cloud desktop corresponding to the operating system is also disconnected, thereby greatly reducing the occupation of system resources.

### Embodiment two:

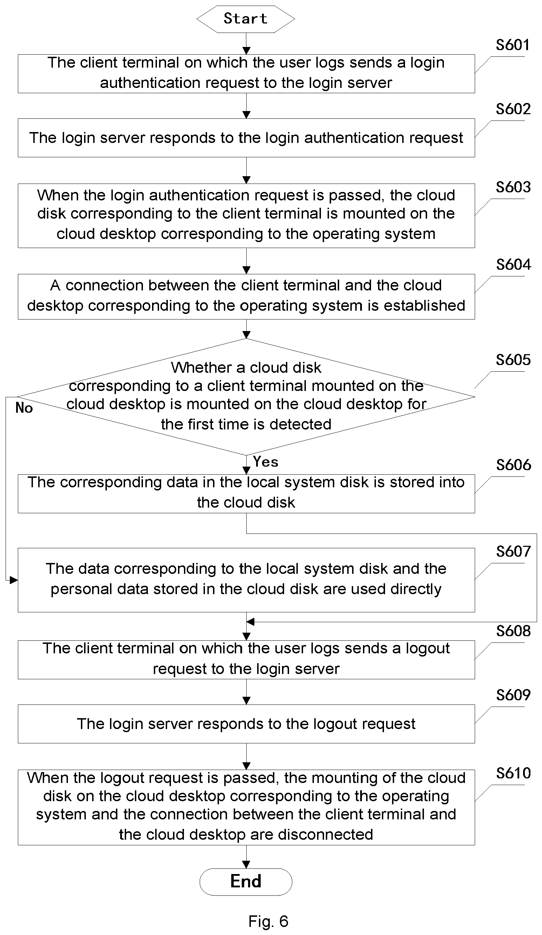

The embodiments of the present invention are further illustrated on the basis of the first embodiment by taking a specific method for sharing the operating system as an example, and please refer to Fig. 6:
S601: the client on which the user logs sends a login authentication request to the login server.
S602: the login server responds to the login authentication request.
S603: when the login authentication request is passed, the cloud disk corresponding to the client is mounted on the cloud desktop corresponding to the operating system.

In the embodiments of the present invention, the operating system is stored in the first server, and the cloud disk is stored in the second server.

In the embodiments of the present invention, regions corresponding to different users may be divided in advance on the second server, that is, corresponding cloud disks are respectively established for different users, and a mapping relationship between the user and the cloud disks is formed. In this way, when the login authentication request is passed, a corresponding cloud disk is directly found according to the mapping relationship, so that the cloud disk is mounted on a cloud desktop corresponding to the operating system.
S604: a connection between the client and the cloud desktop corresponding to the operating system is established.
S605: whether a cloud disk corresponding to a client mounted on the cloud desktop is mounted on the cloud desktop for the first time is detected;

If so, S606 is performed; otherwise, S607 is performed.

S606: the corresponding data in the local system disk is stored into the cloud disk.

S607: the data corresponding to the local system disk and the personal data stored in the cloud disk are used directly.

S608: the client on which the user logs sends a logout request to the login server.

S609: the login server responds to the logout request.

S610: when the logout request is passed, the mounting of the cloud disk on the cloud desktop corresponding to the operating system and the connection between the client and the cloud desktop are disconnected.

According to the method for sharing the operating system provided in the embodiments of the present invention, personal data and the operating system are separately stored on different servers, wherein the operating system is stored on the first server, and the personal data is stored on a disk corresponding to the second server, so that the purchase of the operating system is reduced, thereby greatly reducing the cost of purchasing the operating system by an enterprise, and the usage efficiency of the operating system is improved; furthermore, personal data can be stored for a user, thereby greatly improving experience.

### Embodiment three:

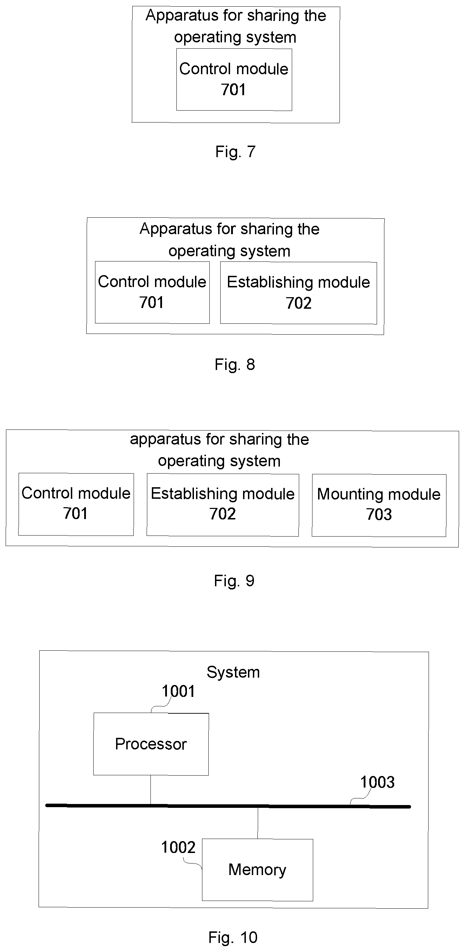

An embodiment of the present invention provides an apparatus for sharing the operating system, which is applied to a cloud desktop. Referring to Fig. 7, the apparatus for sharing the operating system provided in the embodiment of the present invention comprises a control module 701, wherein:
The control module 701 is configured to store the personal data on a server different from a server where the operating system is stored, so that the personal data and the operating system are stored separately, and the operating system can be shared.

In the embodiment of the present invention, the control module 701 is configured to store the operating system on a first server and store the personal data on a second server.

In the embodiment of the present invention, as shown in Fig. 8, the apparatus for sharing an operating system further comprises: an establishing module 702, wherein the establishing module 702 is configured to respectively create corresponding cloud disks for different users on a second server, so as to form a mapping relationship between the user and the cloud disks; in this way, the controlling module 701 may store the personal data onto the cloud disk corresponding to the second server according to the mapping relationship.

In the embodiment of the present invention, the control module 701 is further configured to send a login authentication request to the login server for the client on which the user logs; the login server responds to the login authentication request; when the login authentication request is passed, a connection between the client and the cloud desktop corresponding to the operating system is established.

In the embodiment of the present invention, the control module 701 is further configured to send a logout request to the login server for the client on which the user logs; the login server responds to the logout request; when the logout request is passed, the mounting of the cloud disk on the cloud desktop corresponding to the operating system and the connection between the client and the cloud desktop are disconnected.

In the embodiment of the present invention, as shown in Fig. 9, the apparatus for sharing the operating system further includes a mounting module 703, wherein the mounting module 703 is configured to directly mount a cloud disk corresponding to a client on a cloud desktop; or detect whether the cloud desktop is currently mounted with a cloud disk corresponding to the client, and when the cloud desktop is not currently mounted with the cloud disk corresponding to the client, mount the cloud disk corresponding to the client on the cloud desktop.

In the embodiment of the present invention, the control module 701 is further configured to detect whether a cloud disk corresponding to a client mounted on the cloud desktop is mounted on the cloud desktop for the first time; when the cloud disk is mounted on the cloud desktop for the first time, store corresponding data in a local system disk into the cloud disk; when the cloud disk is not mounted on the cloud desktop for the first time, directly use the personal data and the data corresponding to the local system disk stored in the cloud disk.

It should be noted that, for the purpose of illustration, all examples in the first to the second embodiments are not fully described in the embodiments of the present invention, and it should be clear that all examples in the first to the second embodiments are applicable to the embodiments of the present invention.

According to the device for sharing an operating system provided in the embodiments of the present invention, personal data is stored on a server different from a server where the operating system is stored, so that the personal data and the operating system are stored separately, and the operating system can be shared; the problem in the related art that the use experience of a user is low due to the fact that the use of the operating system and the storage of personal data in a cloud desktop technology are not well solved is solved. Hence, compared with the related art, in the device for sharing the operating system provided in the embodiment of the present invention, the personal data and the operating system are stored separately, so that the purchase of the operating system is reduced, thereby greatly reducing the cost for purchasing the operating system by the enterprise; furthermore, personal data can be stored for a user, thereby greatly improving experience.

### Embodiment four:

Referring to Fig. 10, a system provided in an embodiment of the present invention includes a processor 1001, a memory 1002, and a communication bus 1003.

The communication bus 1003 in the embodiment of the present invention is configured to implement connection and communication between the processor 1001 and the memory 1002, and the processor 1001 is configured to execute one or more programs stored in the memory 1002 so as to implement the following steps:
The personal data is stored on a server different from a server where the operating system is stored, so that the personal data and the operating system are stored separately and the operating system can be shared.

It should be noted that, for the purpose of illustration, all examples in the first to the second embodiments are not fully described in the embodiments of the present invention, and it should be clear that all examples in the first to the second embodiments are applicable to the embodiments of the present invention.

An embodiment of the present invention further provides a computer readable storage medium. The computer readable storage medium stores one or more programs. The one or more programs may be executed by one or more processors, so as to implement the steps of the method for sharing the operating system in Embodiments one to two.

The computer-readable storage media includes volatile or non-volatile, removable or non-removable media implemented in any method or technology for storage of information, such as computer-readable instructions, data structures, computer program modules, or other data. Computer-readable storage media includes, but is not limited to, Read-Only Memory (ROM), Random Access Memory (RAM), Electrically Erasable Programmable Read-Only Memory (EEPROM), flash memory or other memory technology, Compact Disc Read-Only Memory (CD-ROM), Digital Video Disc (DVD) or other optical disk storage, magnetic cassettes, magnetic tape, magnetic disk storage or other magnetic storage devices, or any other medium which can be used to store the desired information and which can be accessed by a computer.

It can be seen that those skilled in the art should understand that the functional modules/units in all or some of the steps, systems and apparatuses in the methods disclosed above may be implemented as software (which may be implemented by computer program codes executable by a computing apparatus), firmware, hardware and appropriate combinations thereof. In a hardware implementation, the division between functional modules/units referred to in the above description does not necessarily correspond to the division of physical components; for example, one physical component may have multiple functions, or one function or step may be cooperatively performed by several physical components. Some or all of the physical components may be implemented as software executed by a processor, such as a central processor, digital signal processor, or microprocessor, or as hardware, or as an integrated circuit, such as an application specific integrated circuit.

In addition, communication media typically embodies computer readable instructions, data structures, computer program modules, or other data in a modulated data signal such as a carrier wave or other transport mechanism, and may include any information delivery media, as known to those of ordinary skill in the art. Hence, the present invention is not limited to any particular hardware and software combination.

The above contents are further detailed description of the embodiments of the present invention with reference to specific embodiments, and it cannot be determined that the specific implementation of the present invention is only limited to these descriptions. For a person of ordinary skill in the art to which the present invention belongs, on the premise of not departing from the conception of the present invention, a number of simple deductions or replacements can also be made, and all of which should be considered to belong to the protection of the present invention

## Claims

1. A method for sharing an operating system, applied to a cloud desktop, comprising:
storing personal data on a server different from a server where an operating system is stored, so that the personal data and the operating system are stored separately, and the operating system can be shared.

2. The method for sharing the operating system according to claim 1, wherein the storing the personal data on the server different from the server where the operating system is stored comprises:
storing the personal data on a second server when the operating system is stored on a first server.

3. The method for sharing the operating system according to claim 2, wherein before storing the personal data on the second server when the operating system is stored on the first server, the method further comprises:
respectively creating, on the second server, corresponding cloud disks for different users, so as to form a mapping relationship between the users and the cloud disks;
the storing the personal data on the second server comprises:
storing the personal data on a cloud disk corresponding to the second server according to the mapping relationship.

4. The method for sharing the operating system according to claim 3, wherein before the storing the personal data on the server different from the server where the operating system is stored, the method further comprises:
sending, by a client on which a user logs, a login authentication request to a login server;
responding, by the login server, to the login authentication request; and
when the login authentication request is passed, establishing a connection between the client and the cloud desktop corresponding to the operating system.

5. The method for sharing the operating system according to claim 3, wherein after the storing the personal data on the server different from the server where the operating system is stored, the method further comprises:
sending, by the client on which the user logs, a logout request to the login server;
responding, by the login server, to the logout request; and
when the logout request is passed, disconnecting the mounting of the cloud disk on the cloud desktop corresponding to the operating system and the connection between the client and the cloud desktop.

6. The method for sharing the operating system according to claim 4, wherein before the establishing the connection between the client and the cloud desktop, the method further comprises:
mounting the cloud disk corresponding to the client on the cloud desktop directly;
or,
detecting whether the cloud disk corresponding to the client is currently mounted on the cloud desktop; and when the cloud disk corresponding to the client is not currently mounted on the cloud desktop, mounting the cloud disk corresponding to the client on the cloud desktop.

7. The method for sharing an operating system according to claim 4, wherein after the establishing the connection between the client and the cloud desktop, the method further comprises:
detecting whether the cloud disk corresponding to the client currently mounted on the cloud desktop is mounted on the cloud desktop for the first time;
when the cloud disk is mounted on the cloud desktop for the first time, storing corresponding data in a local system disk into the cloud disk;
when the cloud disk is not mounted on the cloud desktop for the first time, directly using the data corresponding to the local system disk and the personal data that are stored in the cloud disk.

8. An apparatus for sharing an operating system, applied to a cloud desktop, the apparatus comprises a control module;
the control module is configured to store the personal data on a server different from a server where the operating system is stored, so that the personal data and the operating system are stored separately, and the operating system can be shared.

9. A system comprising: a processor, a memory, and a communication bus;
the communication bus is configured to implement connection and communication between the processor and the memory;
the processor is configured to execute one or more computer programs stored in the memory, so as to implement the steps of the method for sharing the operating system as claimed in any one of claims 1 to 7.

10. A computer readable storage medium, the computer readable storage medium stores one or more computer programs, wherein the one or more computer programs can be executed by one or more processors, so as to implement steps of the method for sharing the operating system as claimed in any one of claims 1 to 7.
